# FASCICULE DE BREVET EUROPEEN

(11) **EP 2 936 379 B1**
(45) Date de publication et mention de la délivrance du brevet: **17.03.2021**
(21) Numéro de dépôt: 13814932.3
(22) Date de dépôt: 20.12.2013
(51) Int. Cl.: G06K 7/00

(54) **DÉTECTION D'UN DISPOSITIF TRANSACTIONNEL**
ERKENNUNG EINER TRANSAKTIONSVORRICHTUNG
DETECTION OF A TRANSACTIONAL DEVICE

(30) Priorité: 21.12.2012 FR 1262728
(43) Date de publication de la demande: 28.10.2015
(73) Titulaire: Ingenico Group, 75015 Paris (FR)
(72) Inventeur: BERTHIAUD, Olivier, 07130 Cornas (FR); ROSSIGNOL, Michel, 26760 Montleger (FR)
(74) Mandataire: Vidon Brevets & Stratégie
(86) Numéro de dépôt international: PCT/EP2013/077598
(87) Numéro de publication internationale: WO 2014/096315

(56) Documents cités:
- KR-A- 20070 075 724
- US-A- 5 929 414

## Description

### 1. DOMAINE DE L'INVENTION

Le domaine de l'invention est celui des terminaux de lecture de carte.

Plus précisément, l'invention concerne une technique de sélection d'un mode de communication à utiliser pour communiquer avec une carte client par exemple bancaire.

L'invention a de nombreuses applications, telles que par exemple dans le domaine de la monétique (i.e. des terminaux de paiement bancaires), ou des titres de transport.

Plus généralement, elle peut s'appliquer dans tous les cas où il est nécessaire de communiquer avec une carte de manière optimale.

### 2. ARRIÈRE-PLAN TECHNOLOGIQUE

On s'attache plus particulièrement dans la suite de ce document à décrire la problématique existante dans le domaine des terminaux bancaires, à laquelle ont été confrontés les inventeurs de la présente demande de brevet. L'invention ne se limite bien sûr pas à ce domaine particulier d'application, mais présente un intérêt pour toute technique de lecture de carte à puces devant faire face à une problématique proche ou similaire.

La norme EMVco (pour *« Europay, MasterCard, Visa and co»)* prévoit la possibilité qu'une carte à puce et un terminal de paiement puissent posséder une pluralité de mode de communications. Ainsi, un terminal de paiement peut comprendre différents moyens de communication nécessitant un contact physique avec une carte (via par exemple une piste, ou un micromodule), ainsi que différents moyens de communication sans contacts (compatibles avec les normes liées à la NFC (pour *« Near Field Communication »)* ou au RFID (pour *« Radio frequency identification »),* qui fonctionnent de manière séparée.

Ainsi, un tel lecteur doit être capable, en fonction de la carte présentée, de sélectionner le mode de communication adéquat (et donc les moyens de communication correspondants) pour réaliser une transaction bancaire.

De manière classique, lorsque la carte présentée est insérée dans une première fente de lecture du terminal, celui-ci sélectionne de manière implicite des premiers moyens de communication avec contact (via un micromodule). Lorsque la carte présentée est insérée dans une deuxième fente de lecture du terminal, comprenant une tête magnétique, celui-ci sélectionne de manière implicite des deuxièmes moyens de communication avec contact (tête de lecture magnétique). Enfin, lorsque la carte présentée est à proximité (de l'ordre de quelques centimètres) d'un émetteur d'un terminal correspondant à un module de communication sans contacts (et plus précisément dans la zone de rayonnement d'un tel émetteur), et que la carte transmet une réponse suite à l'activation de moyens de communication sans contacts à destination du terminal, celui-ci sélectionne un module de communication sans contact pour communiquer avec la carte présentée.

Ainsi, pour permettre une telle sélection, les moyens de communication sans contacts du terminal sont souvent activés en permanence (ou bien ils sont activés à intervalles réguliers, comme dans certaines techniques, dans lesquelles les moyens de communication sans contact sont utilisés en émettant des impulsions courtes pour tenter de détecter la présence d'une carte) pour respecter les contraintes de sélection implicite du mode de paiement par l'utilisateur (contrainte réglementaire en France par exemple).

Or, lorsqu'un utilisateur souhaite insérer une carte mixte (i.e. une carte comprenant un module de communication avec contact, ainsi que sans contacts) dans la première ou la deuxième fente de lecture, il se peut qu'il passe la carte mixte à proximité de l'émetteur du terminal durant cette phase d'approche de l'une des fentes, et que la carte mixte engage une transaction avant qu'elle ne soit positionnée dans l'une des fentes. Le terminal de paiement peut alors générer une erreur car il n'est généralement pas autorisé à traiter simultanément deux « lectures » de cartes. Ainsi, lorsque la carte mixte passe à proximité de l'émetteur sans contact du terminal, l'énergie fournit par le champ électromagnétique de l'émetteur du terminal active les moyens de communication sans contacts de la carte mixte. Puis la carte mixte transmet une information spécifiant qu'elle peut réaliser une transaction électronique, via les moyens de communication sans contacts. C'est à partir de la réception par le terminal d'une telle information que le temps global d'une transaction est suivi par le terminal. Ainsi, un inconvénient d'une telle technique réside dans le fait qu'au temps global d'une transaction s'ajoute un temps additionnel résultant de l'activation et de l'envoi, par la carte mixte, d'une information spécifiant qu'elle peut réaliser une transaction électronique, via les moyens de communication sans contacts.

Les lecteurs de cartes sans contact doivent fonctionner à plusieurs centimètres quelque soit le type de carte utilisateur. Pour garantir que les différents lecteurs soient opérationnels simultanément il faudrait donc les éloigner les uns des autres de plus de cinq à dix centimètres ce qui devient impossible pour des produits compacts.

Un autre inconvénient lié à une activation en permanence d'un module de communication sans contacts du terminal, réside dans le fait que le terminal a besoin d'une alimentation énergétique importante (de par le surcroît de consommation induit par le fonctionnement en permanence un module de communication sans contacts du terminal), ce qui induit des contraintes de dimensionnement des alimentations d'un tel terminal, ainsi que des problèmes d'échauffement et d'autonomie pour des terminaux portables

Le document US5929414 concerne un dispositif permettant de lire les cartes IC avec contact et aussi les cartes IC sans contact.

Le document de l'art antérieur KR20070075724 concerne un dispositif permettant de distinguer les cartes IC. KR20070075724 présente un système appelé « hybrid » permettant de lire les cartes IC et aussi les cartes magnétiques. Lorsqu'une carte est insérée, le système essaie d'abord de communiquer avec la carte par l'interface IC. Si la carte est simplement une carte magnétique, les opérations sur l'interface IC deviennent inutiles. KR20070075724 propose une méthode permettant d'identifier d'abord, par un détecteur, si la carte insérée est munie d'une interface IC. Le système sélectionne ensuite une interface appropriée pour communiquer avec la carte (IC ou magnétique). En revanche la solution décrite ne fonctionne que sur les lecteurs hybrides après insertion de la carte.

### 3. EXPOSÉ DE L'INVENTION

L'invention ne présente pas ces inconvénients de l'art antérieur. Plus particulièrement, l'invention se rapporte à un terminal comprenant des moyens de communication avec un dispositif personnel de réalisation de transactions, dit dispositif transactionnel, lesdits moyens de communication comprenant un premier module de communication comprenant une interface de lecture par contact, et un deuxième module de communication comprenant une interface de lecture sans contact, ledit terminal étant caractérisé en ce qu'il comprend un module de détection comprenant :
- au moins un capteur de position de dispositif transactionnel, délivrant une donnée représentative d'une position d'un dispositif transactionnel par rapport audit terminal ; et
- au moins un module de commande d'au moins un module de communication parmi lesdits premiers et deuxièmes modules de communication, ledit au moins un module de commande activant ledit module de communication en fonction de ladite donnée représentative de ladite position dudit dispositif transactionnel.

Ainsi lorsqu'un utilisateur approche un dispositif transactionnel (par exemple une carte ou un terminal mobile) du terminal, et que ledit au moins un module de détection détecte, via au moins un capteur, une position du dispositif transactionnel associée (de manière implicite) à un choix d'utilisation soit du premier module de communication, soit du deuxième module de communication, ledit au moins un module de commande est activé : dans le cas de figure où le dispositif transactionnel est destiné à communiquer avec le premier module de communication, ledit au moins un module de commande peut laisser éteint le deuxième module de communication, ou seulement réduire l'intensité du deuxième module de communication. Il peut être aussi possible d'augmenter le niveau d'énergie alloué au premier module (passant d'un mode « sommeil » à un mode actif) ; dans le cas de figure où le dispositif transactionnel est destiné à communiquer avec le deuxième module, ledit au moins un module de commande peut laisser éteint le premier module de communication, ou seulement réduire l'intensité du premier module de communication. Il peut être aussi possible d'augmenter le niveau d'énergie alloué au deuxième module de communication (passant d'un mode « sommeil » à un mode actif).

Selon une caractéristique particulière, ledit capteur comprend au moins un capteur optique.

Ainsi un tel capteur optique permet de détecter précisément la position du dispositif transactionnel. Notamment, un tel capteur permet de distinguer un dispositif transactionnel d'un autre objet, et d'éviter ainsi d'utiliser un module de commande sans une raison valable.

Selon un mode de réalisation particulier, ledit terminal comprend une pluralité de modules de détections, chaque module de détection comprenant au moins un capteur, lequel est adapté à la détection de la position d'un dispositif transactionnel en fonction de contraintes prédéterminées liées audit module de communication auquel ledit module de détection est associé.

Ainsi, le terminal est capable, en utilisant une pluralité de modules de détections de commander au mieux le premier et/ou deuxième modules de communication.

Selon une caractéristique particulière, chaque module de détection de ladite pluralité de modules de détections est apte à commander les moyens de communications associés audit module de détection.

Ainsi, chaque module de détection du terminal est associé soit auxdits premiers moyens, soit auxdits deuxièmes moyens de communication. Par conséquent, de tels modules de détection dédiés ainsi répartis peuvent détecter toutes les positions d'intérêts d'un dispositif transactionnel. Dans une variante, un module de détection comprend une pluralité de capteurs permettant ainsi d'affiner la détection d'une position du dispositif transactionnel.

Selon un mode de réalisation particulier, ledit capteur dudit module de détection, capteur qui est associé audit deuxième module de communication, est positionné à la surface de l'écran dudit terminal.

Ainsi, le terminal peut communiquer avec un dispositif transactionnel, quand bien même lesdits premiers et deuxièmes modules de communication sont proches. Une telle architecture n'est pas réalisable selon l'état de la technique.

Selon un mode de réalisation particulier, ledit premier module de communication comprend une tête de lecture magnétique et/ou une interface de contacts électriques.

Selon une caractéristique particulière, ledit deuxième module de communication est compatible avec au moins l'une quelconque des normes suivantes : ISO/CEI 18092, ISO/CEI 14443-1 à ISO/CEI 14443-4 et NDEF.

Selon une caractéristique particulière, ledit terminal est un terminal de paiement, et en ce que ledit au moins un module de commande permet d'initier une transaction électronique.

Ainsi, contrairement aux techniques de l'art antérieur, c'est le terminal, via ledit au moins un module de commande, et non le dispositif transactionnel, qui « initie » une transaction électronique, suite à la détection d'un positionnement du dispositif transactionnel, et ce, sans attendre une information émise par le dispositif transactionnel.

Selon un mode de réalisation particulier, ledit au moins un module de commande permet de réduire ou d'augmenter une consommation électrique d'un desdits modules de communication.

Selon une caractéristique particulière, ledit au moins un module de commande permet d'activer ou de stopper un module desdits modules de communications.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1(a) et 1(b) présentent un terminal de paiement selon l'état de la technique, dans lequel la présente invention peut être mise en œuvre ;
- la figure 1(c) présente un autre terminal de paiement, selon l'état de la technique, comprenant en plus des caractéristiques techniques du terminal présenté en figures 1(a) et 1(b), une ligne de petites lumières vertes positionnées à proximité d'un écran d'affichage, dans lequel la présente invention peut être mise en œuvre ;
- les figures 2(a), 2(b), 2(c), 2(d) et 2(e) présentent différents modes de réalisation de la présente invention ;
- la figure 3 présente la structure, de manière schématique, d'un terminal selon la présente invention.

### 5. DESCRIPTION DÉTAILLÉE

Sur toutes les figures du présent document, les éléments et étapes identiques sont désignés par une même référence numérique.

Dans la suite de la description, nous considérons qu'un dispositif transactionnel correspond à une carte mixte. Cependant, l'Homme du métier pourra bien entendu adapter la présente technique au cas de figure où un dispositif transactionnel correspond à un téléphone portable, ou à tout autre dispositif électronique comprenant des moyens équivalents à ceux d'une carte mixte (par exemple, un terminal mobile peut comprendre un module de communication sans contact (de type NFC) ainsi qu'un module de communication avec contact (via une connexion par un port USB ou autre).

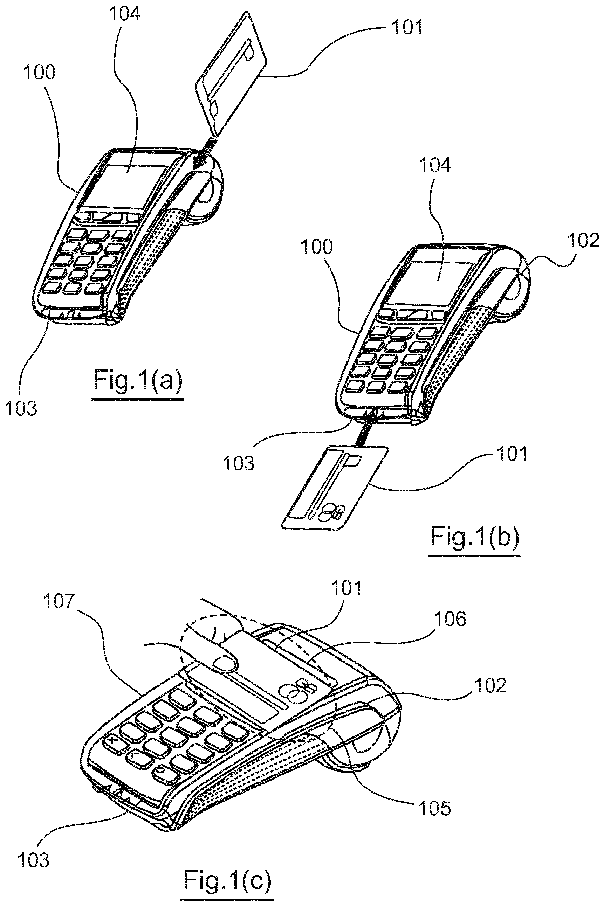

Les figures 1(a) et 1(b) présentent un terminal de paiement selon l'état de la technique, dans lequel la présente invention peut être mise en œuvre.

Plus précisément, un tel terminal, référencé 100, comprend un premier module de communication, dit module par contact, ainsi qu'un deuxième module de communication, dit module sans contact, permettant de communiquer avec une carte mixte, référencée 101.

Selon un mode de réalisation, le premier module de communication comprend une tête de lecture magnétique et une interface de contacts électriques, qui sont logés respectivement dans une première fente de lecture, référencée 102, et une deuxième fente de lecture, référencée 103. Dans une variante, non représentée, le premier module de communication comprend uniquement une tête de lecture magnétique ou interface de contacts électriques.

Le deuxième module de communication, positionné à proximité d'un écran d'affichage du terminal, référencé 104, est quand à lui compatible avec au moins l'une quelconque des normes suivantes : ISO/CEI 18092, ISO/CEI 14443-1 à ISO/CEI 14443-4 et NDEF. Ainsi, le deuxième module de communication, permet, lorsque la carte 101 est positionnée à proximité (environ trois à quatre centimètres) de celui-ci, de réaliser un paiement sans contact (qui est plus rapide ou plus adapté qu'un autre mode de paiement utilisant le premier module de communication). Le temps de lecture d'une carte sans contact par un terminal de paiement varie de 0,5 à 1 seconde.

La figure 1(c) présente un autre terminal de paiement, selon l'état de la technique, comprenant en plus des caractéristiques techniques du terminal présenté en figures 1(a) et 1(b), une ligne, référencée 106, de diodes lumineuses positionnées à proximité d'un écran d'affichage, dans lequel la présente invention peut être mise en œuvre.

Une telle ligne 106 permet de signifier à un utilisateur la fin d'une transaction électronique, lorsque le deuxième module de communication a été utilisé. En effet, une fois qu'une transaction utilisant le deuxième module de communication a été réalisée, le terminal 100 affiche sur l'écran 104 un message du type « Paiement accepté », et simultanément, les diodes lumineuses s'allument et un signal sonore est émis.

Il convient de noter que, pour que la transaction réalisée via le deuxième module de communication réussisse, il faut que l'utilisateur positionne la carte dans une zone bien précise, référencée 105.

Cependant, comme mentionnée dans la section 2 du présent document, il se peut que différents problèmes puissent survenir, notamment lorsqu'un utilisateur passe à proximité d'une telle zone 105, alors qu'il souhaite positionner la carte dans la fente 102, ou la fente 103.

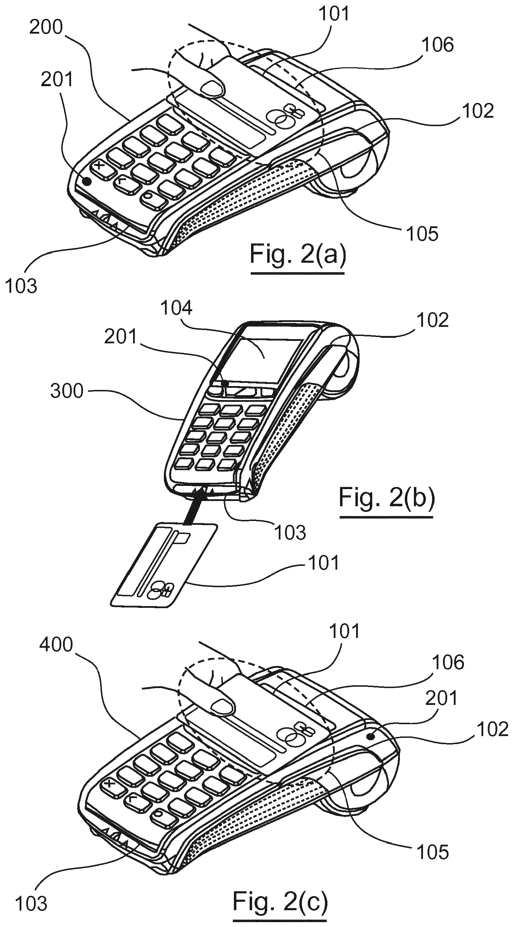

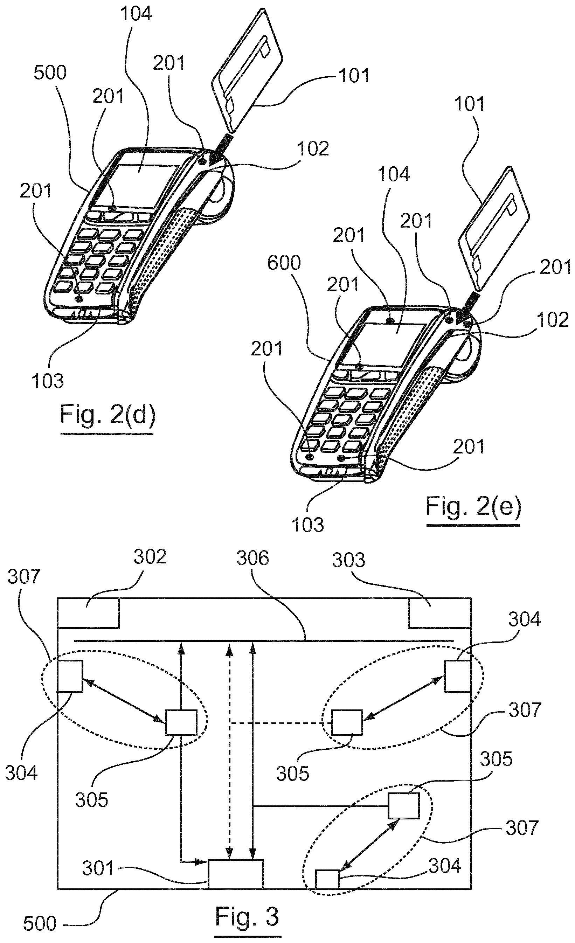

La présente invention vise à pallier de tels problèmes. Notamment, les figures 2(a), 2(b), 2(c), 2(d) et 2(e) présentent différents modes de réalisation de la présente invention permettant de pallier de tels problèmes.

Plus précisément, la figure 2(a) présente un terminal, référencé 200, selon la présente invention. Un tel terminal 200 comprend les caractéristiques techniques d'un terminal classique (tel que mentionné en lien avec les figures 1(a), 1(b) et/ou 1(c) ; par la suite, on considère qu'un tel terminal 200 comprend les mêmes caractéristiques techniques que celles présentes dans le terminal de la figure 1(c)). En outre, un tel terminal 200 comprend au moins un module de détection comprenant :
- au moins un capteur de position 201 d'une carte 101, délivrant une donnée représentative d'une position d'une carte par rapport audit terminal ; et
- au moins un module de commande d'au moins un module de communication parmi les premiers et deuxièmes modules de communication, le module de commande étant activé en fonction de la donnée représentative de la position de la carte.

Le capteur de position 201 est positionné, en figure 2(a), à proximité d'une fente de lecture 103 comprenant une interface de contacts électriques. Ainsi, le capteur de position 201 est, selon un mode de réalisation de l'invention, positionné à proximité d'un premier module de communication.

Ainsi, lorsque le capteur de position 201 détecte une position particulière de la carte 101, il est alors capable de commander le premier module de communication et/ou le deuxième module de communication. Il convient de préciser que le capteur de position 201 au sens de l'invention n'est pas un capteur de présence d'une carte comme dans les dispositifs de l'art antérieur. En effet, dans l'art antérieur, on cherche à détecter la présence de la carte à proximité du lecteur. Ainsi, dans ces techniques de l'art antérieur, il importe peu que la carte soit détectée perpendiculairement, de profil, etc. La seule chose que cherche à faire les techniques de l'art antérieur est de détecter la présence de la carte. Or, on comprend que la détection de la présence de la carte est inutile dans le cadre de la problématique de l'invention : on cherche à sélectionner, parmi plusieurs interfaces possibles, l'interface que l'utilisateur du dispositif transactionnel souhaite utiliser. La détection de la présence de la carte dans ce cadre est de peu d'utilité. Au contraire, selon l'invention, on détecte la position de la carte par rapport au terminal. Cette position est une information plus pertinente dans le cadre de la problématique posée par l'art antérieur. Cette position de la carte par rapport au terminal permet de sélectionner l'interface à utiliser pour réaliser la transaction. Par exemple, avec l'invention, si la carte est placée de biais, ou perpendiculairement au capteur de position 201, elle ne sera pas considérée comme étant dans une position convenable et le module de commandes ne déclenchera pas l'interface associée à ce capteur (par exemple l'interface sans contact). Ceci est subtil mais extrêmement important. Comme cela a été mentionné, selon les normes en vigueur, lorsqu'une interface est sélectionnée et qu'une transaction est initiée, celle-ci doit être réalisée dans un temps donné, or avec les techniques de détection de l'art antérieur il n'est pas assuré que la transaction puisse être réalisée dans le temps imparti car la carte peut être détectée alors même qu'elle est mal positionnée, ce qui peut induire un problème de transmission/réception de données en provenance de la carte.

L'invention, qui offre une possibilité de détection de la position de la carte, assure que la carte est correctement placée par rapport au terminal avant de débuter la transaction. Par ailleurs, selon l'invention, le module de commande active le module de communication auquel il est associé directement : cela signifie qu'une fois la carte ou le dispositif transactionnel détecté dans une position correcte, la transaction débute immédiatement. Il n'est donc pas nécessaire de vérifier qu'il s'agit d'abord d'une carte, que cette carte peut répondre aux sollicitations du terminal, etc. Ces opérations sont longues, inutiles et coûteuses au niveau énergétique. Au contraire, selon l'invention, on débute directement la transaction.

La figure 2(b) présente un autre terminal, référencé 300, selon la présente invention. Un tel terminal 300 comprend les caractéristiques techniques d'un terminal classique (tel que mentionné en lien avec les figures 1(a), 1(b) et/ou 1(c) ; par la suite, on considère qu'un tel terminal 300 comprend les mêmes caractéristiques techniques que celles présentes dans le terminal de la figure 1(a)). Le terminal 300 comprend au moins un module de détection comprenant un capteur de position 201, mais positionné à proximité du deuxième module de communication. Ainsi, de par le positionnement du deuxième module de communication, un tel capteur de position 201 est positionné à proximité (de l'ordre de quelques centimètres au maximum) d'un écran d'affichage 104.

Ainsi, dans ce mode de réalisation, le terminal est capable d'initier une transaction, via le deuxième module de communication, sans attendre que la carte ne se manifeste via l'émission d'une donnée. Dans un mode de réalisation particulier de l'invention (non représenté) le terminal 300 comprend en outre des diodes lumineuses et/ou infra rouge (agencées de manière similaire à celles présentées en figure 1(c)) qui sont des diodes électroluminescentes (LED) particulières. Ces diodes sont associées à un capteur de lumière visible ou infra rouge, par exemple un phototransistor pour réaliser un capteur de position. Ainsi, il est possible d'utiliser cette propriété pour détecter la position de la carte : quand une carte est à proximité du récepteur on peut détecter la position et la proximité par une diminution de la lumière ambiante et/ou par réflexion des infra rouge émis par la ou les LED, Dans le cas contraire, lorsque la carte n'est pas correctement positionnée ou n'est pas présente, le courant généré dans le récepteur indique au module de commande que l'interface sans contact ne doit pas être utilisée.

Dans un autre mode de réalisation, un capteur infra rouge est utilisé, conjointement à un émetteur infrarouge. Un tel couple capteur/émetteur présente plusieurs avantages. Parmi ces avantages, on a la précision de la détection de position. Un autre avantage réside dans la faible consommation d'énergie de ce couple (au regard de la consommation de l'émetteur sans contact). Dans un mode de réalisation complémentaire, particulièrement adapté au terminal à batterie, le couple émetteur/capteur infrarouge est mis en œuvre périodiquement, par exemple tous les dixièmes de seconde. Il est mis en œuvre uniquement pour quelques dizaines de microseconde. Cette mise en œuvre périodique est suffisante pour permettre de vérifier qu'une carte est ou non placée dans une bonne position. Cette mise en œuvre périodique est avantageuse car elle réduit encore la consommation d'énergie.

Accessoirement, les modes de réalisation précédents mettent en avant deux caractéristiques de l'invention : d'une part le fait que plusieurs capteurs sont utilisés en conjonction avec une interface donnée pour affiner la détection de la position d'un dispositif transactionnel ; d'autre part le fait que les capteurs peuvent être utilisés soit à titre principal soit à titre complémentaires.

La figure 2(c) présente un autre terminal, référencé 400, selon la présente invention. Un tel terminal 400 comprend les caractéristiques techniques d'un terminal classique (tel que mentionné en lien avec les figures 1(a), 1(b) et/ou 1(c) ; par la suite, on considère qu'un tel terminal 400 comprend les mêmes caractéristiques techniques que celles présentes dans le terminal de la figure 1(c)). Le terminal 400 comprend au moins un module de détection comprenant un capteur de position 201, positionné à proximité d'une fente de lecture 102 comprenant une interface de contacts correspondant à une tête de lecture électromagnétique. Ainsi, le capteur de position 201 est, selon un mode de réalisation de l'invention, positionné à proximité d'un premier module de communication.

La figure 2(d) présente un autre terminal, référencé 500, selon la présente invention. Un tel terminal 500 comprend les caractéristiques techniques d'un terminal classique (tel que mentionné en lien avec les figures 1(a), 1(b) et/ou 1(c) ; par la suite, on considère qu'un tel terminal 500 comprend les mêmes caractéristiques techniques que celles présentes dans le terminal de la figure 1(a)). Le terminal 500 comprend trois capteurs 201, positionnés respectivement à proximité d'une fente de lecture 102 comprenant une interface de contacts correspondant à une tête de lecture électromagnétique, à proximité d'une fente de lecture 103 comprenant une interface de contacts électriques, et à proximité du deuxième module de communication. Ainsi, les capteurs 201 sont, selon un mode de réalisation de l'invention, positionnés à proximité de chacun des premiers et deuxièmes modules de communication.

La figure 2(e) présente un autre terminal, référencé 600, selon la présente invention. Un tel terminal 600 comprend les caractéristiques techniques d'un terminal classique (tel que mentionné en lien avec les figures 1(a), 1(b) et/ou 1(c) ; par la suite, on considère qu'un tel terminal 600 comprend les mêmes caractéristiques techniques que celles présentes dans le terminal de la figure 1(a)). Le terminal 600 comprend un module de détection comprenant une pluralité de capteurs 201, positionnés par paires respectivement à proximité d'une fente de lecture 102 comprenant une interface de contacts correspondant à une tête de lecture électromagnétique, à proximité d'une fente de lecture 103 comprenant une interface de contacts électriques, et à proximité du deuxième module de communication. Ainsi, en augmentant le nombre de capteurs, et en choisissant une topologie particulière permettant de détecter de manière optimale une position d'un dispositif transactionnel, un tel terminal empêche l'utilisation de moyens de communications qui ne concordent pas avec la position d'un dispositif transactionnel.

Ainsi, selon la présente invention, lorsqu'un utilisateur approche une carte de la fente de lecture 102, les capteurs 201 positionnés à proximité d'une telle fente de lecture 102 détecte alors une position induisant un choix d'utilisation d'une lecture par piste magnétique. Ainsi, selon un mode de réalisation, le module de commande associé à de tels capteurs peut éteindre l'alimentation du deuxième module de communication, ainsi que l'alimentation de l'interface de contacts électriques comprise dans la fente de lecture 103, tout en préparant des données relative à la transaction qui va se produire. Ainsi, le temps global d'une transaction s'en trouve réduit.

La figure 3 présente la structure, de manière schématique, d'un terminal selon la présente invention.

Plus précisément, la figure 3 présente le terminal 500 décrit en lien avec la figure 2(d). Selon un tel mode de réalisation, le terminal 500 comprend un microprocesseur, auquel est associée d'une part une mémoire vive, par exemple au moyen d'un bus, et d'autre part une mémoire non volatile (par exemple du type EEPROM), par exemple à travers un bus.

Le terminal peut échanger des données avec des dispositifs extérieurs (i.e. des dispositifs transactionnels comme une carte sans contact ou un dispositif nfc) au moyen d'un premier et d'un deuxième module de communication. Plus précisément, le premier module de communication, référencé 306, comprend une tête de lecture magnétique, référencée 302, ainsi qu'une interface de contacts électriques (par exemple conformément à la norme ISO/IEC 7816), référencée 303. Le deuxième module de communication, référencé 301, peut être compatible avec au moins l'une quelconque des normes suivantes : ISO/CEI 18092, ISO/CEI 14443-1 à ISO/CEI 14443-4 et NDEF.

Dans un mode de réalisation, des modules de détection, référencés 307, comprennent chacun un capteur, référencé 304, d'une position d'un dispositif transactionnel, chaque capteur étant positionné selon la configuration présentée en figure 2(d), ainsi qu'un module de commande 305. Un tel module de commande 305 est relié, via des bus, à au moins un capteur, et par exemple, aux premier et deuxième modules de communication, permettant ainsi de commander de manière directe ces modules de communications en fonction de la donnée obtenues via un capteur 304.

Selon une variante, un module de détection peut comprendre une pluralité de capteurs, et une pluralité de modules de commande.

Selon une variante, le terminal comprend un unique module de commande de tous les modules de communications, et une pluralité de capteurs répartis à proximité des modules de communications. Un tel module de commande étant en interaction avec la totalité des capteurs.

Dans un autre mode de réalisation, une application qui est exécutée sur un terminal coordonne le fonctionnement des modules de commande.

Plus généralement, quel que soit le mode de réalisation, l'invention consiste à rajouter un capteur de position de dispositif transactionnel dans la zone de lecture de des modules de communication. Un capteur optique peut être utilisé et permet par rapport à d'autres techniques de détection de valider le bon positionnement de la carte et pas seulement la proximité de celle-ci. Ce capteur de type optique permet :
- la détection de la position du dispositif transactionnel (via entre autres, des moyens de reconnaissance de forme, permettant d'éviter de confondre une position d'une main, ou d'autre objet, avec une position d'un dispositif transactionnel) .
- de mettre en action le module de communication adéquat (par exemple le lecteur sans contact) uniquement quand cela est nécessaire.
- de permettre la cohabitation des différents types de lecteurs dispositifs transactionnels : piste, puces à contacts, puces sans contacts.
- un gain significatif sur l'autonomie des terminaux portable équipée de lecteur de carte sans contact.

Dans une variante, un module de commande peut aussi commander un capteur afin de préciser la position du dispositif transactionnel qui a été détectée une première fois.

Dans un autre mode de réalisation, l'invention se rapporte également à une méthode de détection d'une position d'un dispositif transactionnel. Selon l'invention, une telle méthode comprend :
- au moins une étape de détection d'une position d'un dispositif transactionnel, délivrant une donnée représentative d'une position d'un dispositif transactionnel par rapport au terminal ; et
- une étape de commande d'au moins un module de communication parmi les modules de communication du terminal, le au moins un module de commande activant le module de communication en fonction de la donnée représentative de ladite position dudit dispositif transactionnel.

Selon un mode de réalisation particulier, l'étape de détection est mise en œuvre de manière périodique, en activant et en désactivant le capteur à intervalles réguliers afin de vérifier la position, par rapport au terminal, d'un éventuel dispositif transactionnel. Cette mise en œuvre périodique peut être réalisée une dizaine de fois par seconde pendant un laps de temps très court, comme par exemple une dizaine à une centaine de micro secondes.

## Revendications

1. Terminal comprenant des moyens de communication avec un dispositif personnel de réalisation de transactions, dit dispositif transactionnel, lesdits moyens de communication comprenant un premier module de communication (306) comprenant une interface de lecture par contact (302, 303), et un deuxième module de communication (301) comprenant une interface de lecture sans contact, ledit terminal étant **caractérisé en ce qu'**il comprend un module de détection (307) comprenant :
- au moins un capteur de position (201) de dispositif transactionnel, délivrant une donnée représentative d'une position d'un dispositif transactionnel par rapport audit terminal ; et
- au moins un module de commande (305) d'au moins un module de communication parmi lesdits premiers et deuxièmes modules de communication, ledit au moins un module de commande (305) activant ledit module de communication en fonction de ladite donnée représentative de ladite position dudit dispositif transactionnel.

2. Terminal selon la revendication 1, **caractérisé en ce que** ledit capteur comprend au moins un capteur optique.

3. Terminal selon l'une quelconque des revendications 1 et 2, **caractérisé en ce qu'**il comprend une pluralité de modules de détections, chaque module de détection comprenant au moins un capteur, lequel est adapté à la détection de la position d'un dispositif transactionnel en fonction de contraintes prédéterminées liées audit module de communication auquel ledit module de détection est associé.

4. Terminal selon la revendication 3, **caractérisé en ce que** chaque module de détection de ladite pluralité de modules de détections est apte à commander les moyens de communications associés audit module de détection.

5. Terminal selon l'une quelconque des revendications 1 à 4, **caractérisé en ce que** ledit capteur dudit module de détection, capteur qui est associé audit deuxième module de communication, est positionné à la surface de l'écran dudit terminal.

6. Terminal selon l'une quelconque des revendications 1 à 5, **caractérisé en ce que** ledit premier module de communication comprend une tête de lecture magnétique et/ou une interface de contacts électriques.

7. Terminal selon l'une quelconque des revendications 1 à 6, **caractérisé en ce que** ledit deuxième module de communication est compatible avec au moins l'une quelconque des normes suivantes : ISO/CEI 18092, ISO/CEI 14443-1 à ISO/CEI 14443-4 et NDEF.

8. Terminal selon l'une quelconque des revendications 1 à 7, **caractérisé en ce que** ledit terminal est un terminal de paiement, et **en ce que** ledit au moins un module de commande permet d'initier une transaction électronique.

9. Terminal selon l'une quelconque des revendications 1 à 8, **caractérisé en ce que** ledit au moins un module de commande permet de réduire ou d'augmenter une consommation électrique d'un desdits modules de communication.

10. Terminal selon l'une quelconque des revendications 1 à 9, **caractérisé en ce que** ledit au moins un module de commande permet d'activer ou de stopper un module desdits modules de communications.

## Patentansprüche

1. Endgerät, umfassend Kommunikationsmittel mit einer persönlichen Vorrichtung zum Durchführen von Transaktionen, wobei die Kommunikationsmittel ein erstes Kommunikationsmodul (306), das eine Leseschnittstelle durch Kontakt (302, 303) aufweist, und ein zweites Kommunikationsmodul (301) aufweist, das eine kontaktlose Leseschnittstelle aufweist, wobei das Endgerät **dadurch gekennzeichnet ist, dass** es ein Erfassungsmodul (307) aufweist, umfassend:
- mindestens einen Positionssensor (201) der Transaktionsvorrichtung, der eine Dateneinheit bereitstellt, die für eine Position einer Transaktionsvorrichtung in Bezug auf das Endgerät repräsentativ ist, und
- mindestens ein Steuermodul (305) von mindestens einem Kommunikationsmodul unter dem ersten und zweiten Kommunikationsmodul, wobei das mindestens eine Steuermodul (305) das Kommunikationsmodul in Abhängigkeit von der Dateneinheit, die für die Position der Transaktionsvorrichtung repräsentativ ist, aktiviert.

2. Endgerät nach Anspruch 1, **dadurch gekennzeichnet, dass** der Sensor mindestens einen optischen Sensor aufweist.

3. Endgerät nach einem der Ansprüche 1 bis 2, **dadurch gekennzeichnet, dass** es mehrere Erfassungsmodule aufweist, wobei jedes Erfassungsmodul mindestens einen Sensor aufweist, der zum Erfassen der Position einer Transaktionsvorrichtung in Abhängigkeit von vorbestimmten Einschränkungen geeignet ist, die mit dem Kommunikationsmodul verbunden sind, dem das Erfassungsmodul zugeordnet ist.

4. Endgerät nach Anspruch 3, **dadurch gekennzeichnet, dass** jedes Erfassungsmodul der mehreren Erfassungsmodule geeignet ist, die Kommunikationsmittel zu steuern, die mit dem Erfassungsmodul verbunden sind.

5. Endgerät nach einem der Ansprüche 1 bis 4, **dadurch gekennzeichnet, dass** der Sensor des Erfassungsmoduls, Sensor der mit dem zweiten Kommunikationsmodul verbunden ist, an der Oberfläche des Bildschirms des Endgeräts angeordnet ist.

6. Endgerät nach einem der Ansprüche 1 bis 5, **dadurch gekennzeichnet, dass** das erste Kommunikationsmodul einen magnetischen Lesekopf und/oder eine Schnittstelle von elektrischen Kontakten aufweist.

7. Endgerät nach einem der Ansprüche 1 bis 6, **dadurch gekennzeichnet, dass** das zweite Kommunikationsmodul mit mindestens einer der folgenden Normen kompatibel ist: ISO/CEI 18092, ISO/CEI 14443-1 bis ISO/CEI 14443-4 und NDEF.

8. Endgerät nach einem der Ansprüche 1 bis 7, **dadurch gekennzeichnet, dass** das Endgerät ein Zahlungsendgerät ist und **dadurch gekennzeichnet, dass** das mindestens eine Steuermodul ermöglicht, eine elektronische Transaktion einzuleiten.

9. Endgerät nach einem der Ansprüche 1 bis 8, **dadurch gekennzeichnet, dass** das mindestens eine Steuermodul ermöglicht, einen Stromverbrauch von einem der Kommunikationsmodule zu reduzieren oder zu erhöhen.

10. Endgerät nach einem der Ansprüche 1 bis 9, **dadurch gekennzeichnet, dass** das mindestens eine Steuermodul ermöglicht, ein Modul der Kommunikationsmodule zu aktivieren oder zu stoppen.

## Claims

1. Terminal comprising communications means for communicating with a personal device for carrying out transactions, called a transactional device, said communications means comprising a first communications module (306) comprising a reading interface for contact reading (302, 303), and a second communications module (301) comprising a contactless reading interface, said terminal being **characterized in that** it comprises a detection module (307) comprising:
- at least one transactional device position sensor (201) delivering a piece of data representing a position of a transactional device relative to said terminal;
and
- at least one control module (305) for controlling at least one communications module among said first and second communications modules, said at least one control module (305) activating said communications module according to said piece of data representing said position of said transactional device.

2. Terminal according to claim 1, **characterized in that** said sensor comprises at least one optical sensor.

3. Terminal according to any one of the claims 1 or 2, **characterized in that** it comprises a plurality of detection modules, each detection module comprising at least one sensor, which is adapted to the detection of the position of a transactional module according to predetermined constraints related to said communications module with which said detection module is associated.

4. Terminal according to claim 3, **characterized in that** each detection module of said plurality of detection modules is capable of controlling the communications means associated with said detection module.

5. Terminal according to any one of the claims 1 to 4, **characterized in that** the sensor of the detection module, namely a sensor that is associated with said second communications module, is positioned on the surface of the screen of said terminal.

6. Terminal according to any one of the claims 1 to 5, **characterized in that** said first communications module comprises a magnetic read head and/or an interface of electrical contacts.

7. Terminal according to any one of the claims 1 to 6, **characterized in that** said second communications module is compatible with at least anyone of the following standards: ISO/CEI 18092, ISO/CEI 14443-1 to ISO/CEI 14443-4 and NDEF.

8. Terminal according to any one of the claims 1 to 7, **characterized in that** said terminal is a payment terminal and said at least one control module can initiate an electronic transaction.

9. Terminal according to any one of the claims 1 to 8, **characterized in that** said at least one control module makes it possible to reduce or increase electrical consumption of one of said communications modules.

10. Terminal according to any one of the claims 1 to 9, **characterized in that** said at least one control module enables the activating or stopping of one module of said communications modules.
